# EUROPÄISCHE PATENTANMELDUNG

(11) **EP 0 968 866 A2**
(43) Veröffentlichungstag der Anmeldung: **05.01.2000**
(21) Anmeldenummer: 99112840.6
(22) Anmeldetag: 02.07.1999
(51) Int. Cl.: B60K 5/12

(54) **Leistungsoptimierungssystem**

(30) Priorität: 03.07.1998 DE 29811915 U
(71) Anmelder: Stieglmeier, Jürgen, 85229 Markt Indersdorf (DE)
(72) Erfinder: Stieglmeier, Jürgen, 85229 Markt Indersdorf (DE)
(74) Vertreter: Grams, Klaus Dieter, Dipl.-Ing.

(57) **Zusammenfassung**

Die Erfindung bezieht sich auf ein Leistungsoptimierungssystem für eine Kart-Motorantriebseinheit (1), die am Chassis eines Gokarts montiert ist. Der Erfindung liegt die Aufgabe zu Grunde, durch eine relativ einfache und preiswerte Maßnahme die Leistung eines Karts weiter zu steigern. Erfindungsgemäß ist daher ein elastisches Auflager zwischen dem Gehäuse der Kartmotor-Antriebseinheit und dem Chassis des Karts angeordnet, dessen Federkennlinie und/oder Federweg bezüglich des Gewichts der Moterantriebseinheit sowie der zu erwartenden Verwindung des Kart-Chassis so abgestimmt ist, daß der Motorblock in jeder Bewegungssituation des Karts im wesentlichen spannungsfrei bleibt und damit eine Leistungssteigerung gegenüber einem starr befestigten Kartmotor sich ergibt. Auf diese Weise ist es möglich, Leistungssteigerungen bei einem konventionellen Kartmotor von über 1 KW zu erzielen. Mit Blick auf den Leistungsbereich solcher Kartmotoren von in der Regel 14 bis 17,5 KW bedeutet dies ein Zugewinn von mehr als 6% an Leistung.

## Beschreibung

Die vorliegende Erfindung betrifft ein Leistungsoptimierungssystem einer Gokartmotor-Antriebseinheit gemäß dem Oberbegriff des Patentanspruchs 1.

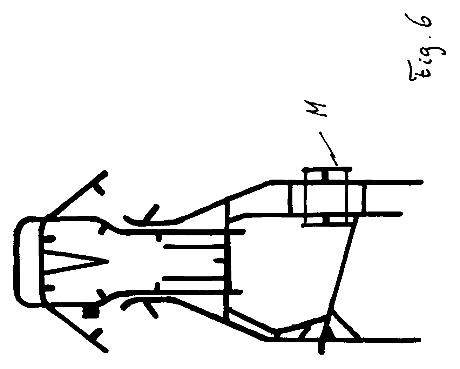

Als Kart-Motoren werden herkömmlicherweise standardisierte 1-Zylinder Zweitaktmotoren mit 100 bis 125 ccm und einer Drehzahl von bis zu 21000 U/min verwendet, wobei diese Motoren starr an einer Rohrrahmen-Konstruktion des jeweiligen Karts montiert sind. In der Fig. 6 ist der prinzipielle Grundriß des Chassis eines Gokarts sowie die Anordnung des Kartmotors dargestellt.

Wie aus der Fig. 6 zu entnehmen ist, besteht das Chassis des Karts aus Hohlprofilrohren, welche zu einem Gitterrahmen zusammengeschweißt sind. Der Motor M ist im Heckbereich des Karts, in Fahrtrichtung gesehen einseitig am Gitterrahmen angeflanscht. Hierfür sind für gewöhnlich zwei im wesentlichen parallele Längsholme im Gitterrahmen vorgesehen, an denen der Motorblock über einen nicht weiter dargestellten Motorbock aus einem Metall in starret Bauweise befestigt wird. Der Motorbock selbst besteht für gewöhnlich aus einer Montageplatte, an deren Unterseite vier entsprechend dem Querschnitt sowie dem Parallelabstand der Längsholme ausgebildete halbkreisförmige Konsolen angeordnet sind. Diese Montageplatte ist auf die Längsholme aufgesetzt, derart, das die Längsholme in den halbkreisförmigen Konsolen zu liegen kommen, wobei Schellen oder Klemmleisten um die Längsholme geführt sind, welche endseitig an der Montageplatte angeschraubt sind und somit die Längsholme zwischen sich und den Konsolen einspannen.

Kartmotoren besitzen aufgrund ihrer geringen Kubikzahl eine verhältnismäßig geringe Leistung, welche insbesondere im rennsportlichen Einsatz, wie in anderen Rennsportarten auch, möglichst maximiert werden soll. D.h. die Motoren werden durch spezielle Bausätze 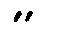 getuned", um so die Motorleistung zu optimieren. Indessen bietet zum Einen die per Reglement limitierte Größe des Motors, wie auch zum Anderen der bei einem Kart begrenzt zur Verfügung stehende Bauraum nur geringe Modifikationsmöglichkeiten zur Leistungssteigerung.

Ferner besitzt das Chassis eines Karts Federungseigenschaften, da für gewöhnlich keine externen Federelemente zwischen den Rädern und dem Kart-Chassis vorgesehen sind. D.h. im Gegensatz zur herkömmlichen Fahrzeugkarosserie mit einer hohen Verwindungssteifigkeit bildet das Kart-Chassis das Federungssystem des Karts, wobei zusätzlich eine vorbestimmte Verwindung bei Kurvenfahrt erzielt werden muß, die ein Abheben des kurveninneren Antriebsrads ermöglicht. Der Grund hierfür besteht darin, daß der Kartantrieb aus Gewichtsgründen kein Differential vorsieht. Die Antriebskraft wird somit während der Kurvenfahrt lediglich über das kurvenäußere Rad übertragen, während das kuveninnere Rad leer dreht.

Der Erfindung liegt angesichts dieser Problematik die Aufgabe zu Grunde, durch eine relativ einfache und preiswerte Maßnahme die Leistung eines Karts weiter zu steigern.

Versuche auf dem Prüfstand haben gezeigt, daß bei einem Kartmotor die Art und Weise, wie der Motor am Gitterrahmen befestigt ist, die auf die Hinterräder abgegebene und meßbare Leistung direkt beeinflußt. In anderen Worten ausgedrückt, ersetzt man die im Stand der Technik grundsätzlich verwendete starre Motorbefestigung durch eine elastische Aufhängung, ergeben sich meßbare Änderungen der Leistungsdaten des gleichen Kartmotors, ohne daß dieser selbst verändert wird. Der Grund hierfür wurde von Seiten der Erfinderin in den besonderen Eigenschaften des Kart-Chassis erkannt. Verwindungen des Chassis führen nämlich zu geringen Verformungen des Motorblocks, woraus wiederum Verspannungen in den Lagerungen bewegbarer Teile des Motors resultieren. Diese Verspannungen bewirken eine Verschlechterung des Wirkungsgrads und damit einen meßbaren Leistungsverlust, zumal die maximale Leistung des Kartmotors ohnehin nicht allzu groß ist.

Eine Versteifung des Motorblocks könnte zwar eine Verbesserung dieser Situation herbeiführen, würde jedoch eine Gewichtszunahme bedeuten und wäre im übrigen aufgrund des begrenzten Bauraums nur eingeschränkt durchführbar.

Erfindungsgemäß ist daher ein elastisches Auflager zwischen dem Gehäuse der Kartmotor-Antriebseinheit und dem Chassis des Karts angeordnet, dessen Federkennlinie und/oder Federweg bezüglich des Gewichts der Motorantriebseinheit sowie der zu erwartenden Verwindung des Kart-Chassis so abgestimmt ist, daß der Motorblock in jeder Bewegungssituation des Karts im wesentlichen spannungsfrei bleibt und damit eine Leistungssteigerung gegenüber einem starr befestigten Kartmotor sich ergibt. Auf diese Weise ist es möglich, Leistungssteigerungen bei einem konventionellen Kartmotor von über 1 KW zu erzielen. Mit Blick auf den Leistungsbereich solcher Kartmotoren von in der Regel 14 bis 17,5 KW bedeutet dies ein Zugewinn von mehr als 6% an Leistung.

Weitere vorteilhafte Ausbildungen der Erfindung sind Gegenstand der übrigen Unteransprüche.

Die Erfindung wird nachstehend anhand bevorzugter Ausführungsbeispiele unter Bezugnahme auf die begleitenden Zeichnungen näher erläutert.
Fig. 1 zeigt als eine Prinzipdarstellung die Seitenansicht eines Kartmotors, sowie dessen Motorbock und elastisches Auf-oder Zwischenlager gemäß einem ersten Ausführungsbeispiel der Erfindung,
Fig. 2 zeigt die Hinteransicht des Kartmotors gemäß dem ersten Ausführungsbeispiel,
Fig. 3 zeigt eine Teilschnittansicht eines zweiten Ausführungsbeispiels der Erfindung,
Fig. 4 zeigt die Seitenansicht eines dritten Ausführungsbeispiels der Erfindung,
Fig. 5 zeigt eine Teilschnittansicht des dritten Ausführungsbeispiels der Erfindung und
Fig. 6 zeigt den Grundriß eines Kart-Chassis in Gitterrohrrahmen-Bauweise.

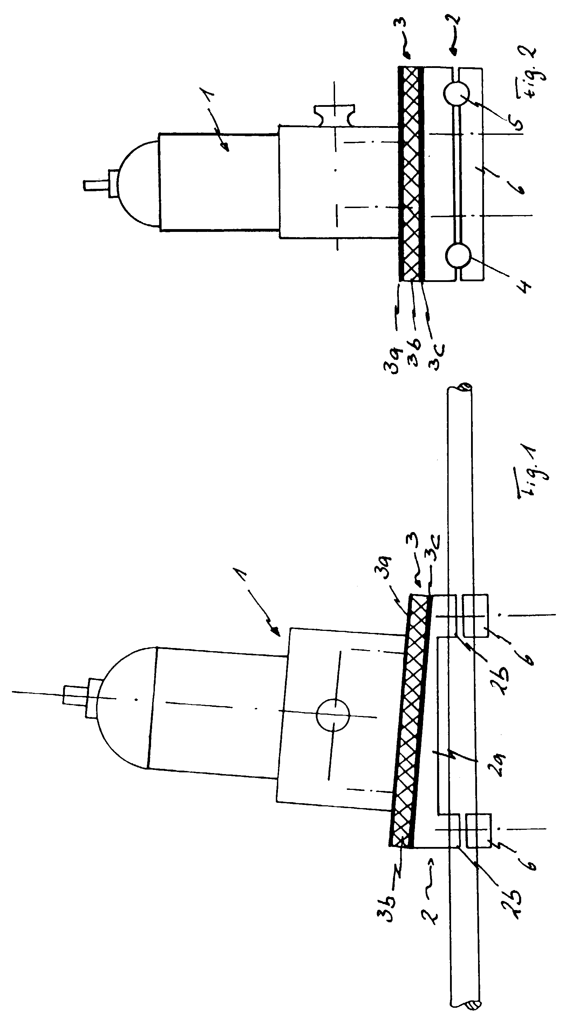

Gemäß der Fig. 1 ist eine Motorantriebseinheit bzw. ein Kartmotor 1 am Chassis eines Gokarts über einen Motorbock 2 und ein elastische Auf- öder Zwischenlager 3 befestigt, dessen Federungseigenschaften, d.h. Federrate, max. Druck- und Schubbelastung und/oder Federweg derart auf das Schwingungsbzw. Verwindungsverhalten des Kart-Chassis, wie auch auf die Gesamtmasse der Motor-Antriebseinheit abgestimmt ist, daß eine Leistungsoptimierung erreicht wird.

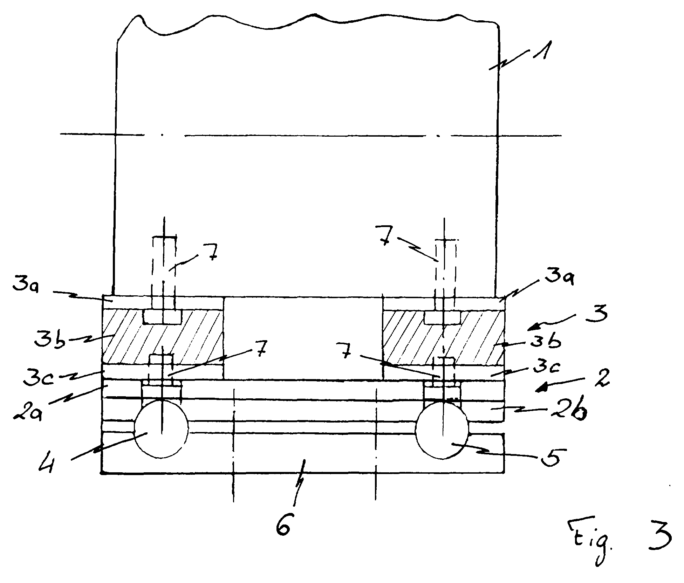

Das Auflager 3 besteht gemäß dem in den Fig. 1 und 2 dargestellten ersten Ausführungsbeispiel der Erfingung aus einem plattenförmigen Metallgummi-Element, d.h. einer oberen Metallplatte 3a, an deren Unterseite eine Matte oder Platte 3b aus einem elastischen Material, vorzugsweise synthetischer Kautschuk (Gummi), angeklebt oder anvulkanisiert ist. An der Unterseite der Gummimatte 3b ist eine weitere untere Metallplatte 3c angeklebt oder anvulkanisiert, wodurch die Gummimatte 3b sandwichartig zwischen die beiden Metallplatten 3a, 3c zwischengefügt ist. An der Oberseite der oberen Metallplatte 3a sowie an der Unterseite der unteren Metallplatte 3c ragen eine Anzahl Schraubenbolzen (vorzugweise vier) jeweils lotrecht vor, die fest mit den jeweiligen Metallplatten 3a bzw. 3c verbunden sind.

An der oberen Metallplatte 3a ist der Motorblock des Kartmotors 1 aufgesetzt und an den Schraubenbolzen fest verschraubt. Die untere Metallplatte 3c sitzt ferner auf dem Motorbock 2 auf, der hierfür eine Montageplatte bzw. ein Podest 2a vorzugsweise aus einem Metall oder einer Metallegierung hat. In dem Podest 2a sind entsprechend der Anzahl und Anordnung der Schraubenbolzen Durchgangslöcher ausgebildet, in welche die Schraubenbolzen beim Aufsetzten des Auflagers 3 auf das Podest 2a eingreifen. Die Schraubenbolzen sind wiederum mittels Schraubenmuttern (nicht gezeigt) an der Unterseite des Podests 2a verschraubt. Das Podest 2a hat an seiner dem Auflager 3 abgewandten Unterseite zwei parallel beabstandete Schienen oder Konsolen 2b, die entweder an dem Podest 2a angeschweißt oder einstückig mit diesem ausgebildet sind. Die Konsolen 2b weisen an ihren jeweils freien Unterkanten halbkreisförmige Einkerbungen auf, welche entsprechend der Form und dem Abstand zweier Längsholme 4, 5 des Gokart-Chassis ausgebildet sind.

Bei der Montage des Motors 1 gemäß dem ersten Ausführungsbeispiel an dem Gokart-Chassis wird zuerst das Auflager 3 (Metallgummi-Platte) in vorstehend beschriebener Weise und Reihenfolge mit dem Motorblock verschraubt, wonach das Auflager 3 samt Motorblock auf den Motorbock 2 d.h. das Podest 2a aufgesetzt und ebenfalls verschraubt wird. Anschließend wird der Motorbock 2 auf den zwei standardmäßig angeordneten Längsholmen 4, 5 des Gokart-Chassis über die quer zur Fahrtrichtung sich erstreckenden schienenförmigen Konsolen 2b aufgesetzt. Hierbei werden die Längsholme 4, 5 im wesentlichen paßgenau in die Einkerbungen an den Konsolen 2b eingelegt, wobei, wie in der Fig. 1 gut zu erkennen ist, die eine Konsole (in Fahrtrichtung gesehen hintere Konsole) höher ist als die andere, wodurch der Motor 1 eine in Fahrtrichtung leicht geneigte Ausrichtung bezüglich des Kart-Chassis erhält.

Der Motorbock 2 hat des weiteren zwei Klemmschienen 6 oder Schellen, welche die Längsholme 4, 5 untergreifen und an ihren Endabschnitten an den Unterseiten bzw. freien Kanten der Konsolen 2b verschraubt werden. Hierdurch werden die Längsholme 4, 5 fest zwischen den Konsolen 2b und den Klemmschienen 6 eingespannt und somit der Motor 1 am Kart-Chassis reibschlüssig fixiert.

Wie eingangs bereits angedeutet wurde, hat das elastische Aufoder Zwischenlager 3 die Funktion, den Motorblock vom Chassis des Karts schwingungszuisolieren, bzw. derart zu entkoppeln, daß eine innere Bewegung des Kart-Chassis nicht in den Motorblock eingeleitet und somit eine Steigerund der Motorleistung gegenüber einem starr befestigten Motor erzielt wird.

Bisher sind elastische Lagerungen normalerweise dafür vorgesehen, die Übertragung einer erzwungenen Schwingung von einem Element auf ein anderes Element zu unterdrücken, wobei die Lagerung im allgemeinen so abgestimmt wird, daß die Eigenfrequenz des jeweils schwingenden Element-Lagerungssystems mindestens um den Faktor 2 kleiner ist, als die Erregerfrequenz. Insbesondere im konventionellen Kraftfahrzeugbau soll auf diese Weise ein besserer Fahrkomfort erreicht werden.

Vorliegend ist diese herkömmliche Abstimmungsart jedoch eher von untergeordneter Bedeutung. Vielmehr wird durch die besondere Wahl der elastischen Auflagerung 3 hinsichtlich ihrer Federrate und ihrem Federweg die Einleitung von Schub- und/oder Torsionskräften in den Motorblock auf Grund von Verwindungsbewegungen des Kart-Chassis unterdrückt, wodurch ein weitgehend spannungsfreier Betrieb beweg- und drehbarer Motorteile gewährleistet und eine Leistungssteigerung des Motors 1 gegenüber einer starren Befestigung meßbar ist und zwar ungeachtet einer Vibrationsisolation zwischen Motor und Chassis.

Bei einem standardisierten Kartmotor 1 der eingangs genannten Gattung erwiesen sich dabei Gummimatten 3b mit einer Stärke von unter 30mm und einer Gummihärte im Bereich von ca. 70 Shore als besonders vorteilhaft. Mit diesen Matten konnte der Motorblock der Motor-Antriebseinheit auch in Kuvenfahrt des Karts, d.h. bei maximaler Verwindung des Chassis nahezu spannungsfrei gehalten werden.

An dieser Stelle sei darauf hingewiesen, daß je nach Wahl der elastischen Aufhängung entsprechend dem Motorgewicht und der Quantität der Chassieverwindung die Übertragung von Schub- und/oder Torsionskräften in den Motorblock mehr oder weniger unterdrückt werden, wobei jedoch durch diese Feinabstimmungen nur noch geringe Leistungssteigerungen verwirklichen lassen. In anderen Worten ausgedrückt, sobald eine Entkopplung des Motors vom Chassis durch Zwischenfügen eines elastischen Bauteils vorgenommen wird, kann ungeachtet einer Feinabstimmung der größte Anteil an Schub- und Torsionskräften im elastischen Bauteil vernichtet und damit der Motorblock im wesentlichen spannungsfrei gehalten werden.

In der Fig. 3 ist ein zweites Äusführungsbeispiel der Erfindung dargestellt, wobei in der nachfolgenden Beschreibung für zum ersten Beispiel gleiche Bauteile ebenfalls gleiche Bezugszeichen verwendet werden.

Gemäß der Fig. 3 besteht das elastische Auflager 3 aus zwei Gummimetall-Schienen, die im Parallelabstand zueinander an den Motorblock des Kartmotors 1 angeschraubt sind. Jede Schiene weist dabei einen Aufbau entsprechend dem elastischen Auflager 3 gemäß dem ersten Ausführungsbeispiel auf, d.h. die Schienen bestehen aus zwei Metallplatten 3a, 3c mit einer zwischengefügten Gummilage 3b und einer Anzahl von Schraubenbolzen 7, welche an den jeweils freien Seiten der Metallplatten 3a, 3c lotrecht vorstehen. In montiertem Zustand des Kartmotors 1 am Kart-Chassis sind die Schienen dabei in Fahrtrichtung ausgerichtet und unmittelbar oberhalb der Längsholme 4, 5 des Kart-Chassis angeordnet, so daß das Motorgewicht direkt in die Längsholme 4, 5 eingeleitet werden kann und keine Biegekräfte im Motorblock 2 d.h. im Podest 2a entstehen. Der Motorbock 2 indessen ist zum Motorbock 2 des ersten Ausführungsbeispiels im wesentlichen baugleich.

Die Funktionsweise der Gummimetall-Schienen 3 gemäß dem zweiten Ausführungsbeispiel ist die Gleiche wie jene des elastischen Auflagers 3 gemäß dem ersten Ausführungsbeispiel, wobei jedoch durch die Schienenform erheblich an Material und damit an Gewicht gegenüber der Plattenform des ersten Beispiels eingespart werden kann. Im übrigen müssen die Schienen nicht derart exakt auf die äußeren Abmessungen des Motorblocks und des Motorbocks 2, insbesondere des Podests 2a abgestimmt sein, wie dies bei der Plattenform des Auflagers 3 gemäß dem ersten Ausführungsbeispiel der Fall ist, welche im wesentlichen dem Grundriß des Podests 2a entspricht. Auf diese Weise können die Herstellungskosten des Auflagers 3 verringert werden.

Alternativ zu den zwei Metallgummi-Schienen können auch vier säulenförmige Metallgummi-Puffer vorgesehen sein, die an den Eckbereichen des Motorblocks und des Podests angeordnet sind.

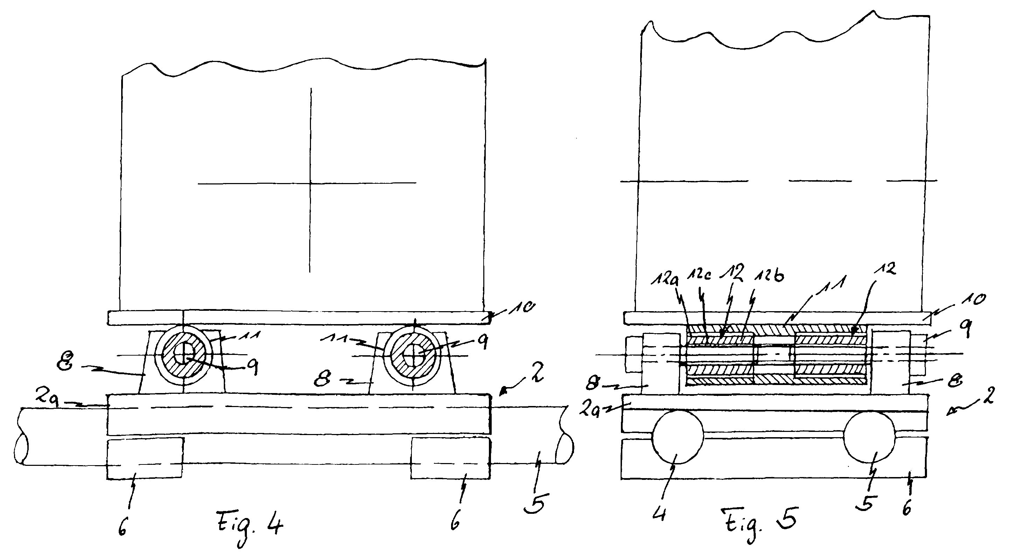

Die Fig. 4 und 5 beziehen sich auf ein drittes Ausführungsbeispiel der Erfindung.

Gemäß diesem dritten Ausführungsbeispiel hat der Motorbock 2 ein Podest 2a, an dessen Unterseite die schienenförmigen Konsolen 2b sowie die Klemmleisten oder Schellen 6 zur reibschlüssigen Verbindung mit den zwei Längsholmen 4, 5 des Kart-Chassis angeordnet sind. Dieser Aufbau entspricht im wesentlichen dem ersten und zweiten Ausführungsbeispielen, so daß an dieser Stelle auf die betreffenden Beschreibungstextstellen verwiesen werden kann.

An der Oberseite des Podests 2a sind jedoch in diesem dritten Ausführungsbeispiel vier Anlenkflansche 8 zur Aufnahme und Lagerung von Verbindungswellen 9 ausgebildet bzw. angeschweißt. Jeder Anlenkflansch 8 bildet dabei eine Art Lagerauge, deren Mittelachsen sich in anmontiertem Zustand des Motorbocks 2 gemäß der Fig. 5 quer zur Fahrtrichtung ausrichten, wobei jeweils zwei Lageraugen fluchtend angeordnet sind. In den Lageraugen sind zwei parallel beabstandete Verbindungswellen 9 aufgenommen, welche durch nicht gezeigte Wellenringe axial gesichert sind.

Ein externes, plattenförmiges Motorbockoberteil 10 ist unmittelbar mit dem Gehäuse des Kart-Motors 1 verschraubt. An einer dem Motorblock 1 abgewandten Unterseite des Motorbockoberteils 10 sind zwei Hülsen 11 aus Metall vorzugsweise durch Schweißen im Parallelabstand zueinander befestigt, deren axiale Länge derart gewählt ist, daß sie zwischen zwei jeweils fluchtende Lageraugen bzw. Anlenkflansche 8 plazierbar sind. In die Hülsen 11 sind jeweils zwei Metallgummi-Buchsen 12 eingesetzt bzw. gepreßt, wobei jede Metallgummi-Buchse aus zwei radial beabstandeten Metallhülsen 12a, 12c und einer Zwischenlage aus Gummi 12b besteht, das an die Metallhülsen 12a, 12c anvulkanisiert ist.

Ähnlich zu den ersten und zweiten Ausführungsbeispielen bildet der Kartmotor 1 und die Metallgummi-Buchsen 12 eine Motor-Auflager-Baugruppe, wobei die Metallgummi-Buchsen 12 den Motorblock vom Chassis entkoppeln und Verwindungsbewegungen des Chassis durch elastischen Verformung absorbieren. Diese Entkopplung d.h. die elastischen Verformung der Metallgummi-Buchsen 12 beeinflussen wiederum die Leistungsdaten des Motors 1 und trägt so zur Leistungsoptimierung des Karts ber. Darüber hinaus hat die Anordnung der Verbindungswellen 9 gegenüber einer reinen Schraubenbolzen-Verbindung den Vorteil, daß der Motor 1 durch einfaches Herausziehen der Wellen 9 schneller vom Kart-Chassis gelöst werden kann, so daß eine versuchstechnische Abstimmund der Metallgummi-Buchsen 12 auf den Wellen beispielsweise durch deren Austausch in einem kürzeren Zeitraum durchgeführt werden kann.

Die Erfindung bezieht sich auf ein Leistungsoptimierungssystem für eine Kart-Motorantriebseinheit (1), die am Chassis eines Gokarts montiert ist. Der Erfindung liegt die Aufgabe zu Grunde, durch eine relativ einfache und preiswerte Maßnahme die Leistung eines Karts weiter zu steigern. Erfingungsgemäß ist daher ein elastiches Auflager zwischen dem Gehäuse der Kartmotor-Antriebseinheit und dem Chassis des Karts angeordnet, dessen Federkennlinie und/oder Federweg bezüglich des Gewichts der Motorantriebseinheit sowie der zu erwartenden Verwindung des Kart-Chassis so abgestimmt ist, daß der Motorblock in jeder Bewegungssituation des Karts im wesentlichen spannungsfrei bleibt und damit eine Leistungssteigerung gegenüber einem starr befestigten Kartmotor sich ergibt. Auf diese Weise ist es möglich, Leistungssteigerungen bei einem konventionellen Kartmotor von über 1 KW zu erzielen. Mit Blick auf den Leistungsbereich solcher Kartmotoren von in der Regel 14 bis 17,5 KW bedeutet dies ein Zugewinn von mehr als 6% an Leistung.

## Patentansprüche

1. Leistungsoptimierungssystem für eine Kart-Motorantriebseinheit (1), die am Chassis eines Gokarts montiert ist,
gekennzeichnet durch
ein zwischen der Motorantriebseinheit (1) und dem Chassis angeordnetes elastisches Auflager (3, 12), durch das die Motorantriebseinheit (1) vom Chassis des Karts zur Leistungsoptimierung entkoppelt ist.

2. Leistungsoptimierungssystem nach Anspruch 2,
dadurch gekennzeichnet, daß
das elastische Auflager (3, 12) derart gewählt ist, daß Verwindungsbewegungen des Kart-Chassis durch elastische Verformung des Auflagers (3) absorbierbar sind, so daß im wesentlichen keine Schub- und/oder Torsionskräfte infolge der Verwindungsbewegung des Chassis in die Motorantriebseinheit (1) übertragen werden und damit die Motorantriebseinheit (1) im wesentlichen spannungsfrei bleibt.

3. Leistungsoptimierungssystem nach einem der Ansprüche 1-2,
dadurch gekennzeichnet, daß
zwischen dem elastischen Auflager (3, 12) und dem Kart-Chassis ein Motorbock (2) zur Montage am Chassis vorgesehen ist.

4. Leistungsoptimierungssystem nach einem der Ansprüche 1-3,
dadurch gekennzeichnet, daß das Auflager (3) zumindest ein Metallgummi-Element hat.

5. Leistungsoptimierungssystem nach Anspruch 4,
dadurch gekennzeichnet, daß
das Metallgummi-Element aus zwei im wesentlichen parallel beabstandeten Metallplatten (3a, 3c) besteht, zwischen den sandwichartig eine elastische Platte (3b), vorzugsweise aus Gummi, zwischengefügt ist, die an die Metallplatten (3a, 3c) angeklebt oder vulkanisiert ist.

6. Leistungsoptimierungssystem nach Anspruch 5,
dadurch gekennzeichnet, daß
die Metallplatten (3a, 3c) an ihren jeweiligen der Gummiplatte (3b) abgewandten Seiten Befestigungsmöglichkeiten (7) vorzugsweise in Form von Schraubenbolzen haben, wobei an der einen Metallplatte (3a) die Motorantriebseinheit (1) und an der anderen Metallplatte (3c) der Motorbock (2) über die Befestigungsmöglichkeiten (7) fixiert ist.

7. Leistungsoptimierungssystem nach einem der Ansprüche 3-6,
dadurch gekennzeichnet, daß
der Motorbock (2) ein Podest (2a) hat, an dem das Metallgummi-Element befestigt ist und an dem eine Anzahl von Konsolen (2b) angeordnet sind, weiche zur Berestigung des Podests (2a) am Kart-Chassis dienen.

8. Leistungsoptimierungssystem nach Anspruch 7,
dadurch gekennzeichnet, daß
das Podest (2a) plattenförmig ist und das Metallgummi-Element im Grundriß dem Podest (2a) entspricht.

9. Leistungsoptimierungssystem nach einem der Ansprüche 3-8,
dadurch gekennzeichnet, daß
zwei Metallgummi-Elemente vorgesehen sind, die schienenförmig ausgebildet und im Parallelabstand zueinander an der Motorantriebseinheit (1) befestigt sind, wobei die schienenförmigen Metallgummi-Elemente auf dem plattenförmigen Podest (2a) verschraubt sind.

10. Leistungsoptimierungssystem nach Anspruch 3,
dadurch gekennzeichnet, daß
das Auflager (12) eine Anzahl von Metallgummi-Büchsen hat.

11. Leistungsoptimierungssystem nach Anspruch 10,
dadurch gekennzeichnet, daß
jede Metallgummi-Büche aus einer äußeren Metallhülse (12a) und einer inneren Metallhülse (12c) besteht, zwischen denen eine Einlage (12b) aus einem elastischen Material, vorzugsweise Gummi eingefügt ist.

12. Leistungsoptimierungssystem nach einem der Ansprüche 10-11
dadurch gekennzeichnet, daß
die Metallgummi-Büchsen auf zwei Verbindungswellen (9) aufgesteckt sind, die an einem Podest (2a) des Motorbocks (2) gelagert sind, wobei die Metallgummi-Büchsen in zwei an einem plattenförmigen Motorbock-Oberteil (10) angeschweißten Hülsen eingepaßt sind, auf welchem die Motorantriebseinheit (1) fixiert ist.

13. Leistungsoptimierungssystem nach Anspruch 12,
dadurch gekennzeichnet, daß
die Wellen (9) in Lageraugen (8) lagern, die am Podest (2a) fixiert sind.
